# EUROPÄISCHE PATENTSCHRIFT

(11) **EP 0 328 753 B1**
(45) Veröffentlichungstag und Bekanntmachung des Hinweises auf die Patenterteilung: **12.10.1994**
(21) Anmeldenummer: 88120047.1
(22) Anmeldetag: 01.12.1988
(51) Int. Cl.: C08F 292/00, C08K 3/00, D21H 17/69

(54) **Verfahren zur Herstellung von Pigment-Kunststoffkonzentraten**
Process for the preparation of a pigment-resin concentrate
Procédé de préparation de concentrés de résine artificielle à pigment

(30) Priorität: 16.02.1988 DE 3804775
(43) Veröffentlichungstag der Anmeldung: 23.08.1989
(73) Patentinhaber: Felix Schoeller jr. Papierfabrik GmbH & Co. KG, D-49086 Osnabrück (DE)
(72) Erfinder: Dethlefs, Ralf-Burkhard, Dipl.-Chem., D-4500 Osnabrück (DE)
(74) Vertreter: Minderop, Ralph H., Dr. rer. nat.

(56) Entgegenhaltungen:
- EP-A- 0 063 459
- FR-A- 1 164 934
- FR-A- 2 437 416
- GB-A- 1 480 530
- US-A- 4 151 126

## Beschreibung

Die Erfindung betrifft ein Verfahren zur Herstellung von Pigment-Kunststoffkonzentraten.

Wie allgemein bekannt, ist das Titandioxid das meist verwendete Pigment bei der Pigmentierung verschiedener Kunststofferzeugnisse. Es kann in seiner Rutil- und Anatasmodifikation, aber auch als mit SiO₂- bzw. Al₂O₃ nachbehandelte Form angewandt werden. Neben Titandioxid finden auch andere anorganische, oxidische Pigmente wie Kobaltblau und Kobaltviolett Verwendung.

Voraussetzung für die volle Entfaltung der Pigmenteigenschaften im Kunststoff sowie für eine störungsfreie Verarbeitung ist die vollständige Zerteilung der Pigmentagglomerate und die homogene Verteilung der Pigmentteilchen. Dies ist besonders wichtig bei der Herstellung dünner Beschichtungen oder Folien (25 - 50µ) da Pigmentagglomerate zur Lochbildung und damit zu Folienabrissen führen. Eine gute Dispergierung ist deshalb notwendig.

Zur Pigmentierung von Polyolefinen verwendet man daher zweckmäßigerweise nicht die reinen pigmente, sondern Pigment-Kunststoffkonzentrate, die sog. Masterbatches, in denen das Pigment bereits dispergiert vorliegt. Die Herstellung solcher Konzentrate erfolgt in einem speziellen Arbeitsgang über die plastische Phase. Hierfür geeignet sind Kneter, Walzwerke und Extruder, wobei die Erhöhung der Scherkräfte eine Verbesserung des Dispergierzustandes bewirkt.

Nach dem heutigen Stand der Technik werden verschiedene Methoden zur Herstellung von Masterbatches vorgeschlagen (z. B. US P 4 650 747, JP 60-75 832). Alle Methoden zeichnen sich dadurch aus, daß sie die Anwendung von Dispergierhilfsmitteln (Salze bzw. Ester höherer Fettsäuren, wie z. B. Stearate) und die Behandlung der Titandioxid-Oberfläche mittels organischer bzw. anorganischer Agenzien (z. B. Alkyltitanate, Alkanolamine, Alkylpolysiloxane, Zircoaluminate) erfordern.

Nachteilig an den oben genannten Methoden ist, daß es trotz der Anwendung von Dispergier- und anderen Hilfsmitteln weiterhin zu einer Entmischung Pigment-Polyolefin und damit zu den bereits beschriebenen Störungen kommen kann.

Nachteilig scheint vor allem die Behandlung der Pigmentpartikel mit verschiedenen Hilfsmitteln zu sein. Offensichtlich werden die Pigmentpartikel nur unvollständig umhüllt und dadurch keine optimale Dispergierbarkeit gewährleistet. Es treten daher weiterhin Pigmentagglomerate auf, die sich z. B. bei der Extrusionsbeschichtung durch einen hohen Siebrückstand, Verstopfung der Düsen sowie Löcher und Risse in der Folie bemerkbar machen.

Da es weiterhin zur Neubildung der Agglomerate kommt, ist der Konzentration der angewandten Pigmente eine Grenze gesetzt, so daß oft die gewünschten bzw. erforderlichen Konzentrationen nicht erreicht werden können.

Ein weiterer Nachteil liegt in der Anwendung von Dispergierhilfsmitteln. Diese können ausschwitzen und sich auf der Oberfläche niederschlagen, was zu Schwierigkeiten bei der Weiterverarbeitung der Polyolefinbeschichtungen oder Polyolefinteile führt.

Es ist auch bekannt, daß auf der Oberfläche eines polymeren Körpers oder festen Stoffes eine Polymerisation erfolgen kann, die eine Umhüllung der Oberfläche von z.B. Glasperlen mit Polyacrylnitril zur Folge hat (N. W. Johnston u.a , Polym. Prep. Amer. Chem. Soc. Div., Polym. Chem. 17, Nr. 2, 1976, S. 491) . Dabei wird die Polymerisation mit radikalischen Initiatoren gestartet. Beim Versuch, dieses Verfahren der umhüllenden Polymerisation auf Pigmente, z. B . TiO₂ zu übertragen, wurde festgestellt, daß zwar die meisten Teilchen des Pigments vom Polymerisat umhüllt waren, aber die bereits erwähnten Störungen bei der Extrusionsbeschichtung durch einen hohen Anteil an Pigmentagglomeraten noch verstärkt auftraten. Um eine befriedigende Verteilung der Pigmente zu erhalten, mußten gleiche Mengen an Dispergierhilfsmitteln verwendet werden.

Die FR-A-1 164 934 beschreibt die Polymerisation von Olefinen in Gegenwart von Feststoffteilchen in einer inerten Suspension. Die Feststoffteilchen werden in einem flüssigen Kohlenwasserstoff suspendiert und dieser Suspension unter Stickstoff TiCl₄ hinzugefügt, auf 70°C erwärmt und schließlich Triethylaluminium hinzugegeben. Dann erfolgt die Zugabe von Ethylen und im Verlaufe der Reaktion wird tropfenweise weiteres Triethylaluminium hinzugefügt. Zum Start der Reaktion wird zwar eine Organoaluminiumverbindung, aber kein vollständiges Ziegler-Katalysatorsystem eingesetzt.

Aus der FR-A-2 437 416 wird die Oberfläche einer Feststoffbeladung zunächst mit einer Übergangsmetallverbindung aus der Gasphase versehen und anschließend aus der Gasphase oder einer flüssigen Phase eine Organometallverbindung der Gruppe II oder III des Periodensystems auf der Oberfläche der Feststoffbeladung abgeschieden. Kern des hier beschriebenen Verfahrens ist, daß zunächst die Übergangsmetallverbindung und anschließend die Organometallverbindung entweder vor oder während der Polymerisation, d. h. vor oder gleichzeitig mit dem Einladen der Monomeren in das Reaktionsgefäß eingebracht wird.

Aufgabe der Erfindung ist es, ein Verfahren zu entwickeln, mit dem es gelingt, eine gute Pigmentverteilung in der Polyolefinmasse und ihre störungsfreie Verarbeitung, z. B. zu Folie, sicherzustellen und dabei Dispergierhilfsmittel möglichst zu eliminieren.

Verfahren zur Herstellung von Pigment-Kunststoffkonzentraten durch eine Oberflächenpolymerisation von Olefinen nach dem Suspension- oder Gasphasenverfahren, wobei man
a) die Oberfläche der anorganisch oxidischen Pigmentpartikel durch Fixierung einer Verbindung eines Übergangsmetalls aktiviert,
b) die Suspension aktivierter Pigmente mit einem gasförmigen Olefin sättigt und anschließend
c) die Polymerisation mittels eines an sich bekannten Katalysatorsystems, enthaltend eine Verbindung eines Übergangselements der IV. bis VIII. Nebengruppe und eine metallorganische Verbindung eines Elements der I. bis III. Gruppe des Periodensystems, startet.

Geeignete Katalysatorsysteme sind die Ziegler- oder Phillips-Katalysatorsysteme, wie z. B. TiCl₃/Al(C₂H₅)₃, TiCl₄/MgCl₂/Al(C₂H₅)₃, TiCl₄/MgCl₂/Al(i-C₄H₉)₃, TiCl₄/Mg(OC₂H₅)₂/Al(C₂H₅)₃, TiCl₄/Mg(OC₂H₅)₂/Al(i-C₄H₉)₃, TiCl₄/Al(C₂H₅)₂H, Ti(OC₂H₅)₄/Al(C₂H₅)₃, VCl₄/Al(C₂H₅)₃, VCl₄/Al(C₂H₅)₂Cl, VOCl₃/Al(i-C₄H₉)₂Cl, VOCl₃/Al(C₂H₅)₂Cl, (C₆H₅)₂Zr(CH₃)₂/Aluminoxan, (C₆H₅)₂ZrCl₂/Aluminoxan, CrO₃/SiO₂, Zr(C₂H₅)₃Cl/SiO₂ und andere.

Ein besonders bevorzugtes Olefin ist Ethylen oder ein Ethylen-α-Olefingemisch. Es kann auch vor Einleiten gasförmiger Olefine ein kleiner Teil eines flüssigen oder festen-α-Olefins in die Suspension gegeben werden.

Besonders geeignete Verbindungen zur Aktivierung der Pigmentoberfläche sind die Ti-, V-Halogenide und die Kombinationen dieser beiden. Auch Titanesterchloride und verschiedene Zirkonium-Verbindungen, z. B. Biscyclopentadienylzirkondimethyl oder -dichlorid oder -diphenyl eignen sich zur Aktivierung.

Anorganische oxidische Pigmente sind beispielsweise alle Titandioxidmodifikationen ohne oder mit anorganischer und/oder organischer Nachbehandlung, ZrO₂, Kobaltblau, Kobaltviolett oder andere Mischoxide wie Erdalkalititanate und Zn-Titanat.

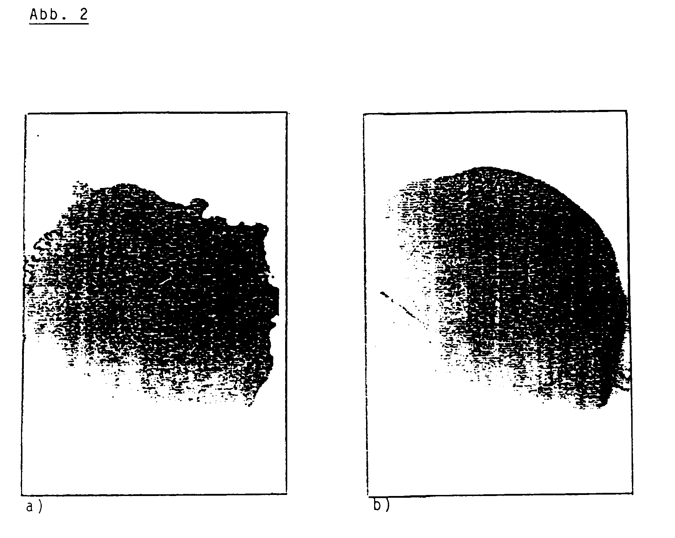

Überraschenderweise kommt es bei dieser Art der Polymerisationsführung zu einer sehr homogenen Verteilung der Pigmentpartikel. Es wird angenommen, daß das Kettenwachstum des Polymers nicht nur außen auf der Oberfläche des Pigments, sondern auch in seinen Poren stattfindet, wodurch eine Sprengung der Pigmentpartikel hervorgerufen wird. Die Pigmentpartikel scheinen darüberhinaus vollständig von Polymer umhüllt zu sein. Dies geschieht jedoch erst nach der erfindungsgemäßen Aktivierung der Oberfläche durch die Fixierung wenigstens einer der Katalysatorsystemkomponenten auf der Pigmentoberfläche und dem daran anschließenden Start der Polymerisation durch Zugabe des Katalysatorsystems. Aus Abbildungen 2 a und b ist die überlegene Wirkung der Erfindung erkennbar.
Ebenso gute Ergebnisse wurden bei der Copolymerisation des Ethylens mit anderen Olefinen beobachtet. Dabei können die α-Olefine mit einer Kettenlänge bis ca. C₂₆-C₂₈ angewandt werden.

Die Regelung des Molekulargewichts bei der Polymerisation entstandenen Polymerisate kann auf übliche Weise erfolgen, z. B. durch die Verwendung von Wasserstoff als Regler.

Das hier beschriebene erfindungsgemäße Verfahren weist folgende Vorteile auf:
- keine Entstehung von Pigmentagglomeraten bei der Herstellung der Konzentrate;
- keine Entmischung Pigment-Polyolefin bei der weiteren Verarbeitung;
- vollständige Zerkleinerung eventuell vorhandener Pigmentagglomerate;
- Wegfall von Dispergierhilfsmitteln.

### Ausführungsbeispiele

### Beispiel 1

100 g Titandioxid (Typ Rutil 2073, Fa. Kronos) und 1,5 l Toluol (über Molsieb getrocknet) wurden unter Stickstoffatmosphäre in einen 2 l-Glasreaktionsgefäß gegeben.

Die Suspension wurde unter Rühren auf 80 °C erhitzt, mit 1,1 g TiCl₄ als Oberflächenaktivator versetzt und anschließend mit Ethylen gesättigt. Nach erfolgter Sättigung wurde dann die Polymerisation durch Zugabe eines modifizierten Ziegler-Katalysatorsystems in einer Konzentration von 1 x 10⁻⁴ mol/l (bezogen auf den Titangehalt) gestartet, wobei weiterhin Ethylen eingeleitet wurde. Das hier angewandte Katalysatorsystem wurde auf bekannte Weise (DE 1 795 197) präpariert; es basiert auf Mg(OC₂H₅)₂/TiCl₄/Al(i-C₄H₉)₃ bei einem Molverhältnis Al/Ti = 125. Die Polymerisation erfolgte bei 80 °C, einem Ethylendruck von 1,15 bar (Gesamtdruck = 1 ,5 bar) und einer Rührerdrehzahl von 1250 U/min.

Die Ethylenkonzentration betrug ca. 0,08 mol/l und konnte aus dem Ethylenpartialdruck berechnet werden.

Die Polymerisation wurde durch Unterbrechung der Ethylenzufuhr abgebrochen, nachdem sich 100 g Polyethylen gebildet hatten. Das Reaktionsprodukt (weißes Pulver) wurde abfiltriert, mit Aceton gewaschen und bei 60 °C vakuumgetrocknet.

### Beispiel 2

Die Durchführung erfolgte wie im Beispiel 1, jedoch wurde der Suspension im Reaktor vor Beginn der Polymerisation 0,25 mol/l Hexen-1 zugesetzt.

Die Polymerisation wurde abgebrochen, nachdem sich 100 g Polymerisat gebildet hatten. Das Copolymerisat enthält 4,5 mol% Hexen-1.

### Beispiel 3

Die Durchführung erfolgte wie im Beispiel 1, jedoch wurde der Suspension im Reaktor vor Beginn der Polymerisation 0,25 mol/l Okten-1 zugesetzt.

Die Polymerisation wurde abgebrochen, nachdem sich 100 g Polymerisat gebildet hatten. Das Copolymerisat enthält 2,5 mol% Okten-1.

### Beispiel 4

Die Durchführung erfolgte wie im Beispiel 1, jedoch wurde der Suspension im Reaktor 0,25 mol/l Tetradecen-1 zugesetzt. Das Copolymerisat enthält 1,5 mol% Tetradecen-1.

### Beispiel 5

Die Durchführung erfolgte wie in Beispiel 1, jedoch wurde der Suspension im Reaktor 0,25 mol/l Oktadecen-1 zugesetzt. Das Copolymerisat enthält 1,5 mol% Oktadecen-1.

### Beispiel 6

Die Durchführung erfolgte wie im Beispiel 1, jedoch wurde die Suspension im Reaktor mit 1,1g VCl₄ als Oberflächenaktivator versetzt und anschließend mit Ethylen gesättigt. Die Polymerisation wurde durch Zugabe des [VCl₄/Al (C₂H₅)₂Cl]-Katalysators in einer Konzentration von 1x10⁻⁴ mol/l, bezogen auf den V-Gehalt gestartet.

### Beispiel 7

Die Durchführung erfolgte wie im Beispiel 1, jedoch wurden 100 g Kobaltblau als Pigment eingesetzt.

### Vergleichsbeispiele

A. Die Durchführung erfolgte wie im Beispiel 1, jedoch wurde die Reaktion ohne Oberflächenaktivierung gestartet.
B. Die Durchführung erfolgte wie im Beispiel 1, jedoch wurde die Polymerisation mit 0,6 g t-Butylperoxy-Maleinsäure gestartet.
C. Zum Vergleich wurde ein handelsübliches Pigment-Kunststoffkonzentrat (mit Verwendung von Stearaten als Dispergierhilfsmittel) herangezogen.

Die in den beschriebenen Beispielen enthaltenen Konzentrate wurden bei 180 °C zu Plättchen gepreßt und von diesen Röntgenaufnahmen angefertigt.

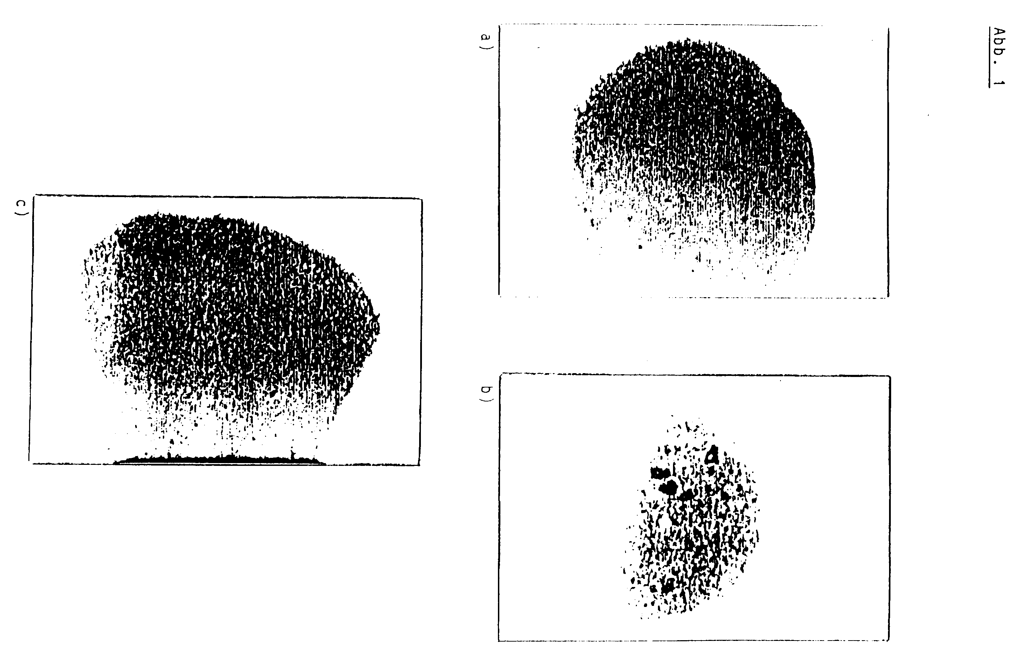

Abb. 1 zeigt qualitativ die Pigmentverteilung in der Polymermatrix der in Vergleichsbeispielen A, B, C erhaltenen Proben. Abb. 2 zeigt die Pigmentverteilung in der Polymermatrix der in Beispielen 1 und 7 erhaltenen Proben.

### Abb. 1

a) Probe nach Vergleichsbeispiel A
b) Probe nach Vergleichsbeispiel B
c) Probe nach Vergleichsbeispiel C

### Abb. 2

a) Probe nach Beispiel 1
b) Probe nach Beispiel 7

## Patentansprüche

1. Verfahren zur Herstellung von Pigment-Kunststoffkonzentraten durch eine Oberflächenpolymerisation von Olefinen nach dem Suspension- oder Gasphasenverfahren,
**dadurch gekennzeichnet**, daß man
a) die Oberfläche der anorganisch oxidischen Pigmentpartikeln durch Fixierung einer Verbindung eines Übergangsmetalls aktiviert,
b) die Suspension aktivierter Pigmente mit einem gasförmigen Olefin sättigt und anschließend
c) die Polymerisation mittels eines an sich bekannten Katalysatorsystems, enthaltend eine Verbindung eines Übergangselements der IV bis VIII. Nebengruppe und eine metallorganische Verbindung eines Elements der I. bis III Gruppe des Periodensystems, startet.

2. Verfahren nach Anspruch 1, dadurch gekennzeichnet, daß die Oberfläche der Pigmentpartikel vor der Zugabe des Katalysatorsystems durch Fixierung wenigstens einer Komponente des Katalysatorsystems aktiviert wird.

3. Verfahren nach Anspruch oder 2, dadurch gekennzeichnet, daß die Oberfläche mittels Titan- und/oder Vanadium-Halogeniden aktiviert wird.

4. Verfahren nach Anspruch 1 oder 2, dadurch gekennzeichnet, daß die Oberfläche mittels Titanesterchloriden oder Titantetrachlorid aktiviert wird.

5. Verfahren nach Anspruch 1 oder 2, dadurch gekennzeichnet, daß die Oberfläche mittels Biscyclopentadienylzirkondimethyl oder -dichlorid oder -diphenyl aktiviert wird.

6. Verfahren nach mindestens einem der Ansprüche 1 bis 5, dadurch gekennzeichnet, daß die Polymerisation mittels eines modifizierten Ziegler- oder Phillips-Katalysatorsystems durchgeführt wird.

7. Verfahren nach Anspruch 6, dadurch gekennzeichnet, daß das modifizierte Ziegler-Katalysatorsystem [Mg(OC₂H₅)₂/TiCl₄/Al(i-C₄H₉)₃] eingesetzt wird.

8. Verfahren nach Anspruch 1 bis 7, dadurch gekennzeichnet, daß als Pigment ein Titandioxid eingesetzt wird.

9. Verfahren nach Anspruch 8, dadurch gekennzeichnet, daß als Pigment Titandioxid in Rutil-Form eingesetzt wird.

10. Verfahren nach Anspruch 8, dadurch gekennzeichnet, daß als Pigment Titandioxid in Anatas-Form eingesetzt wird.

11. Verfahren nach Anspruch 8, dadurch gekennzeichnet, daß als Pigment ein mit Aluminiumoxid nachbehandeltes Titandioxid eingesetzt wird.

12. Verfahren nach Anspruch 8, dadurch gekennzeichnet, daß als Pigment ein mit Siliziumdioxid nachbehandeltes Titandioxid eingesetzt wird.

13. Verfahren nach Anspruch 1 bis 7, dadurch gekennzeichnet, daß als Pigment Kobaltblau eingesetzt wird.

14. Verfahren nach Anspruch 1 bis 7, dadurch gekennzeichnet, daß als Pigment Kobaltviolett eingesetzt wird.

15. Verfahren nach Anspruch 1 bis 14, dadurch gekennzeichnet, daß zur Polymerisation Ethylen verwendet wird.

16. Verfahren nach Anspruch 1 bis 15, dadurch gekennzeichnet, daß die Polymerisation in Gegenwart eines weiteren Olefins, insbesondere α-Olefin, durchgeführt wird.

## Claims

1. Process for the preparation of synthetic pigment concentrates by surface polymerisation of olefins in accordance with the suspension or gas phase process,
characterised in that
a) the surface of the inorganically oxidic pigment particles is activated by fixing a compound of a transition metal,
b) the suspension of activated pigments is saturated with a gaseous olefin and then
c) the polymerisation is started by means of a catalyst system known per se containing a compound of a transition element of sub-groups IV to VIII and an organometal compound of an element of groups I to III of the Periodic Table.

2. Process according to claim 1, characterised in that, prior to the addition of the catalyst system, the surface of the pigment particles is activated by fixing at least one component of the catalyst system.

3. Process according to claim 1 or 2, characterised in that the surface is activated by means of titanium halides and/or vanadium halides.

4. Process according to claim 1 or 2, characterised in that the surface is activated by means of titanium ester chlorides or titanium tetrachloride.

5. Process according to claim 1 or 2, characterised in that the surface is activated by means of biscyclopentadienylzirconium dimethyl or dichloride or diphenyl.

6. Process according to at least one of claims 1 to 5, characterised in that the polymerisation is effected by means of a modified Ziegler or Phillips catalyst system.

7. Process according to claim 6, characterised in that the modified Ziegler catalyst system [Mg(OC₂H₅)₂/TiCl₄/Al (i-C₄H₉)₃] is used.

8. Process according to claims 1 to 7, characterised in that a titanium dioxide is used as the pigment.

9. Process according to claim 8, characterised in that titanium dioxide in rutile form is used as the pigment.

10. Process according to claim 8, characterised in that titanium dioxide in anatase form is used as the pigment.

11. Process according to claim 8, characterised in that a titanium dioxide after-treated with aluminium oxide is used as the pigment.

12. Process according to claim 8, characterised in that a titanium dioxide after-treated with silicon dioxide is used as the pigment.

13. Process according to claims 1 to 7, characterised in that cobalt blue is used as the pigment.

14. Process according to claims 1 to 7, characterised in that cobalt violet is used as the pigment.

15. Process according to claims 1 to 14, characterised in that ethylene is used for the polymerisation.

16. Process according to claims 1 to 15, characterised in that the polymerisation is effected in the presence of a further olefin, especially α-olefin.

## Revendications

1. Procédé de préparation de concentré de pigment pour matières plastiques par une polymérisation en surface d'oléfines par le procédé en suspension ou en phase gazeuse,
caractérisé en ce que :
a) la surface des particules de pigment oxydé inorganique est activée par la fixation d'un composé d'un métal de transition;
b) la suspension de pigment activé est saturée par une oléfine en phase gazeuse; et ensuite
c) la polymérisation est déclenchée au moyen d'un système de catalyseur connu en soi, contenant un composé d'un élément de transition du quatrième au huitième sous-groupe et d'un composé organo-métallique d'un élément du premier au troisième groupe du système périodique.

2. Procédé selon la revendication 1, caractérisé en ce que la surface des particules de pigment est activée avant l'introduction du système de catalyseur par la fixation d'au moins un composant du système de catalyseur.

3. Procédé selon la revendication 1 ou 2, caractérisé en ce que la surface est activée au moyen d'halogénures de titane et/ou de vanadium.

4. Procédé selon la revendication 1 ou 2, caractérisé en ce que la surface est activée au moyen de chlorure d'ester de titane ou de tétrachlorure de titane.

5. Procédé selon la revendication 1 ou 2, caractérisé en ce que la surface est activée au moyen de bis-cyclopentadiénylzirconiumodiméthyle ou de dichlorure ou de diphényle.

6. Procédé selon au moins l'une des revendications 1 à 5, caractérisé en ce que la polymérisation est réalisée en utilisant un système de catalyseur modifié de Ziegler ou de Phillips.

7. Procédé selon la revendication 6 caractérisé en ce que le système de catalyseur modifié de Ziegler utilisé est [Mg(OC₂H₅)₂/TiCl₄/Al(i-C₄H₉)₃].

8. Procédé selon les revendications 1 à 7, caractérisé en ce que l'on utilise comme pigment un dioxyde de titane.

9. Procédé selon la revendication 8, caractérisé en ce que l'on utilise comme pigment du dioxyde de titane sous forme de rutile.

10. Procédé selon la revendication 8, caractérisé en ce que l'on utilise comme pigment du dioxyde de titane sous forme d'anatase.

11. Procédé selon la revendication 8, caractérisé en ce que l'on utilise comme pigment un dioxyde de titane traité par l'oxyde d'aluminium.

12. Procédé selon la revendication 8, caractérisé en ce que l'on utilise comme pigment un dioxyde de titane traité par le dioxyde de silicium.

13. Procédé selon les revendications 1 à 7, caractérisé en ce que l'on utilise comme pigment du bleu de cobalt.

14. Procédé selon les revendications 1 à 7, caractérisé en ce que l'on utilise comme pigment du violet de cobalt.

15. Procédé selon les revendications 1 à 14, caractérisé en ce que l'on utilise de l'éthylène pour la polymérisation.

16. Procédé selon les revendications 1 à 15, caractérisé en ce que l'on effectue la polymérisation en présence d'une autre oléfine et en particulier d'une α-oléfine.
